# EUROPEAN PATENT APPLICATION

(11) **EP 4 779 177 A1**
(43) Date of publication of application: **22.07.2026**
(21) Application number: 25153184.4
(22) Date of filing: 21.01.2025
(51) Int. Cl.: F16H 57/04, B60K 17/16, B60K 7/00

(54) **LUBRICATION SYSTEM FOR A GEARING OF A VEHICLE**

(71) Applicant: ZF Friedrichshafen AG, 88046 Friedrichshafen (DE)
(72) Inventor: Kong, Yunlai, Shanghai, 201615 (CN)
(74) Representative: WBH Wachenhausen Patentanwälte PartG mbB

(57) **Abstract**

The present invention relates to a lubrication system (90) for a gearing (10) of a vehicle (1). The lubrication system (90) comprises a tank (50) for storing lubricant and a sump (60) for receiving lubricant from the gearing (10). The lubrication system (90) also comprises a lubrication section (40) with a gearing lubrication branch (42; 44) for supplying lubricant to at least one element of the gearing (10) for lubrication. The lubrication system (90) further comprises an electric pump (20) for selectively supplying lubricant to the lubrication section (40). Furthermore, the lubrication system (90) comprises a control valve (22) for selectively fluidly connecting the electric pump (20) to the sump (60) or the tank (50) for drawing lubricant. The present invention also relates to a method for controlling a lubrication system, a control unit, a gearing and a vehicle.

## Description

### Technical field

The present disclosure relates to a lubrication system for a gearing of a vehicle and a method for controlling such a lubrication system. The present disclosure also relates to a control unit, a gearing and a vehicle.

### Prior art

Gearings for vehicles are known. In some cases, the gearing is provided with a lubrication system for lubricating elements of the gearing. In such gearings, an electric or mechanical lubricant pump may be provided for pressurizing the lubricant. Under certain conditions, the electric lubricant pump may be inoperable, for example in very low temperatures, such that lubrication may be insufficient. Under certain conditions, the mechanical pump may cause significant pumping losses by pumping an unnecessarily large amount of lubricant. Furthermore, elements of the gearing rotating at least partly in lubricant may cause significant drag losses under certain conditions.

### Summary of the invention

The present disclosure relates in a first aspect to a lubrication system for a gearing of a vehicle. Examples of the vehicle may include a car, a truck, a bus and a working vehicle. Examples for the working vehicle may include a tractor, a combine harvester, a communal vehicle like a street sweeping machine, an excavator, a grader and a loader. The vehicle may comprise a driving unit for directly or indirectly driving the gearing by applying power thereto. The driving unit may comprise an internal combustion engine and/or an electric motor. The driving unit may receive energy from an energy storage, for example a tank or a battery, and convert it to rotational mechanical energy, for example to a driving power for the gearing. The gearing may comprise an input shaft and one or more output shafts. At least one output shaft of the gearing may be mechanically operatively connected to a drive element of the vehicle. If two elements are mechanically operatively connected, the elements are directly or indirectly coupled to each other so that a movement of one element causes a reaction of the other element. A mechanical operative connection can be established, for example, by frictional engagement or geometric fit. The mechanical operative connection can correspond to a meshing between corresponding gears of the two elements. Further elements, such as shafts, constant velocity joints and/or one or more gear sets, may be present between the elements. The drive element may be, for example, a wheel for contacting the ground or a drive wheel or sprocket for tracks. The vehicle may comprise a shiftable transmission disposed in a power flow between the driving unit and the drive element.

The gearing may be configured for converting an input value into an output value. For example, the gearing may be able to convert an input rotational speed into a lower or higher output rotational speed and an input torque into a higher or lower output torque. The gearing may comprise one or more gear sets configured to convert torques and rotational speeds from one value to another. The gearing may be provided as a distribution gearing for distributing power between two output shafts. The gearing may also comprise a differential function. The gearing may comprise a planetary gear set with multiple planetary gear elements. Examples for the planetary gear elements may include a sun gear, a planetary carrier, a planetary pin, a planetary bearing, a planetary gear and a ring gear. The gearing may comprise more than one planetary gear sets. In case multiple planetary gear sets are present, they may be mechanically operatively coupled and may be configured identically or differently from each other. The gearing may comprise other gear sets different from the planetary gear set, for example a spur gear set, a helical gear set and/or a bevel gear set.

The lubrication system may comprise components for providing lubricant and for controlling and directing flows of a lubricant to and from parts of the gearing. Examples of such components may include pumps, channels, reservoirs and switching valves. The lubricant may be configured for lubricating and/or cooling components of gearing. The lubricant may also be provided for lubricating and/or cooling parts of the housing and/or parts of the driving unit. For example, the lubricant may also be configured for cooling an electric machine and an inverter for the electric machine. In one embodiment, the lubrication system comprises lubricant. In one embodiment, the lubricant is oil. In one embodiment, the amount of lubricant is set such that, in operation of the gearing, at least a thin film of lubricant is present between any two elements that contact each other under relative movement during regular operation of the gearing.

The lubrication system comprises a tank for storing lubricant. The tank may be configured to receive lubricant, for example via a tank inlet, to store the received lubricant, and to discharge lubricant, for example via a tank outlet. The tank may comprise further openings for receiving and/or discharging lubricant. The lubrication system also comprises a sump for receiving lubricant from the gearing. The sump may be configured to also receive lubricant from the driving unit. The received lubricant may be lubricant that has been supplied to the gearing and/or the driving unit for lubrication and/or cooling. The lubrication system may be configured such that lubricant to be received by the sump flows passively to the sump, for example under the influence of gravity. The sump may be formed as hollow space inside a housing, for example at a bottom of the housing. Alternatively or additionally, the sump may comprise parts formed outside the housing. The housing may be provided as one or several casings for enclosing stationary and/or rotational components of the gearing and/or the driving unit. The housing may also be configured as a stationary member for providing support and for receiving forces and torques. The housing may comprise several housing portions. Each housing portion may be configured to accommodate and/or support different components. For example, the housing may comprise one or more gearing housing portions for enclosing and rotatably supporting the gearing. For example, the housing may comprise one or more driving unit housing portions for enclosing and rotatably supporting the driving unit. Furthermore, a housing portion may be configured to accommodate an element and to support a different element. For example, a housing portion may be configured to accommodate the driving unit and to support an element of the gearing in addition to an element of the driving unit. The housing portions may be mounted to each other or formed monolithically with each other.

The lubrication system comprises a lubrication section. The lubrication section comprises a gearing lubrication branch for supplying lubricant to at least one element of the gearing for lubrication. The gearing lubrication branch may be a part of the lubrication system and/or a part of the gearing. The gearing lubrication branch may comprise at least one gearing lubrication path for guiding and supplying lubricant to the at least one element of the gearing. The at least one element of the gearing may be any rotating element of the gearing. For example, in case the gearing comprises a planetary gear set, the at least one element of the gearing may be any one of a sun gear, a planetary carrier, a ring gear, a planetary pin, a planet gear and a planet bearing. Further to the one element of the gearing, the gearing lubrication branch may be configured to supply lubricant for lubrication to other or all elements of the gearing. The gearing lubrication branch may also be configured for supplying lubricant to a bearing, for example a shaft bearing of at least one of an input shaft and an output shaft. The lubrication section may comprise at least one of a channel, a ring channel, a nozzle and other means for guiding lubricant. Elements of the lubrication section may be formed separately and/or may be integrated in the housing. Furthermore, elements of the lubrication section may extend through elements of the gearing and/or elements of the driving unit. The lubrication section may also be configured for providing cooling to at least one of the gearing and the driving unit.

The lubrication system further comprises an electric pump for selectively supplying lubricant to the lubrication section. The electric pump may be driven by an electric motor. The electric pump and/or the electric motor may be selectively drivable, for example in accordance with a control signal of a control unit. The electric pump may comprise a variable pumping capacity. The electric pump may comprise an inlet and an outlet and may be configured to selectively create a positive pressure differential between the inlet and the outlet. The electric pump, for example the inlet of the electric pump, may be in fluid communication with at least one of the sump, the tank and the driving unit for drawing lubricant. For example, the electric pump may be configured to draw lubricant from the sump via a sump drain channel. Alternatively or additionally, the electric pump may be configured to draw lubricant from the driving unit via a driving unit drain channel. Alternatively or additionally, the electric pump may be configured to draw lubricant from the tank via the tank outlet. The electric pump, for example the outlet of the electric pump, may be in fluid communication with the lubrication section via a lubrication path for supplying lubricant to the lubrication section. The lubrication path may comprise elements for guiding lubricant, for example at least one channel. Further elements, for example a check valve, a lubricant filter and/or a cooler, may be interposed in the lubrication path between the electric pump and the lubrication section.

The lubrication system comprises a control valve for selectively fluidly connecting the electric pump to the sump or the tank for drawing lubricant. The control valve may be configured to establish a fluid communication between the electric pump and the sump in one state and between the electric pump and the tank in another state. The control valve may be configured to switch discretely between the two states. Alternatively, the control valve may allow for a continuous transition between the two states, such that the inlet of the electric pump may be provided with lubricant partly from the sump and partly from the tank. The control valve may be provided as an electric control valve controlled in accordance with a control signal received from the control unit.

With the lubrication system according to the first aspect, the electric pump may be used to selectively draw lubricant from the sump or the tank by means of the control valve. Accordingly, depending on vehicle conditions, for example a vehicle speed, a lubricant temperature and an operational state of the lubrication system, a lubricant level in the sump may be lowered or increased as appropriate by drawing lubricant from the sump so as to decrease the lubricant level and by drawing lubricant from the tank so as to increase the lubricant level. Splashing generally arises when a rotating element, for example an element of the gearing, is partially immersed in lubricant such that the entering and exiting of the rotating element into and out of the lubricant churns or splashes lubricant into a surrounding environment, for example air. Such partial immersion of rotating elements in lubricant in the sump is described as a wet sump operational state. The splashing of the rotating element results in drag losses and splashing losses, generating a drag torque that acts on the rotating element opposite to a rotation direction of the rotating element. The drag torque increases with increased rotational speed, increased immersion depth and also with increased viscosity of the lubricant. Accordingly, the splashing generally results in splashing losses proportional to the rotational speed and immersion depth of the rotating element. The immersion depth is generally greatest after the machine has been in an operative or extended period of time and the lubricant has gathered in the sump, thereby being at a highest lubricant level. Accordingly, by providing fluid communication between the electric pump and the sump, lubricant can be removed from the sump so as to lower its lubricant level, thereby decreasing splashing losses. Furthermore, the splashing losses are generally exacerbated at lower temperatures due to increases in viscosity of the lubricant. In such a case, it is possible to have the electric pump draw lubricant from the tank so as to increase or maintain the lubricant level in the sump, thereby allowing for a faster increasing temperature of the lubricant. The present embodiment also makes it possible to incur a dry sump operational state, in which the lubricant level is lower than most or all rotating elements, such that the rotating elements are not immersed in lubricant, thereby minimizing splashing losses. In summary, the selective fluid connection of the electric pump with either the sump or the tank allows for efficient lubrication over a broad range of vehicle conditions.

In an embodiment, the lubrication system comprises a mechanical pump drivable by an element of the gearing for drawing lubricant from the sump. For example, the mechanical pump may be mechanically operatively connected to the element of the gearing to be driven in accordance with the rotational speed of the element of the gearing. In one example, the mechanical pump may be drivable by a ring gear of a planetary gear set of the gearing. The mechanical pump may be configured such that it is permanently driven when the element of the gearing rotates. The mechanical pump may have a pumping capacity proportional to its rotational speed and thus proportional to the rotational speed of the element of the gearing. The lubrication system may comprise a further control valve for selectively fluidly connecting the mechanical pump to the lubrication section or the tank for supplying lubricant. For example, an outlet of the mechanical pump may be connected to the further control valve. The further control valve may be configured to selectively provide fluid communication between the outlet of the mechanical pump and the lubrication section or the outlet of the mechanical pump and the tank. The further control valve for the mechanical pump may be configured as described above with respect to the control valve for the electric pump. The inlet of the mechanical pump may be connected with at least one of the sump and the driving unit for drawing lubricant. The mechanical pump may be configured to draw lubricant in the same manner as the electric pump. In one example, the electric pump and the mechanical pump may comprise a plurality of drain channels commonly used for drawing lubricant from the sump and/or the driving unit. By selectively fluidly connecting the mechanical pump to the lubrication section or the tank, it is possible to selectively use the mechanical pump for lubrication or for moving lubricant from the sump to the tank. Accordingly, the mechanical pump allows to decrease lubricant level in the sump by moving lubricant to the tank or to maintain lubricant level in the sump while providing lubrication when moving lubricant to the lubrication section. The fluid communication between the mechanical pump and the lubrication section may comprise at least one section, for example the lubrication path described above, common with the electric pump. Alternatively, the mechanical pump may have a separate fluid communication to the lubrication section. In one example, an inlet of the further control valve and an outlet of the electric pump are connected to a common lubrication path. In such an example, respective check valves may be provided upstream of the lubrication path so as to avoid interference between the electric pump and the further control valve in fluid communication with the mechanical pump. By providing the mechanical pump and the further control valve as described above, it is possible to provide lubrication over a broader range of vehicle conditions.

In one embodiment, the tank is in fluid communication with the sump for draining lubricant to the sump. For example, the tank may comprise a drain opening and a drain outlet in fluid communication with the sump. The drain opening may be provided at an intermediate height between the tank inlet and the tank outlet. By means of the present embodiment, it is possible to passively drain lubricant from the tank to the sump. An equilibrium split of lubricant between the tank and the sump may depend on a present lubricant level in the tank relative to the height of the drain opening. This ratio may be set such that an amount of lubricant sufficient for wet sump operation passively returns to the sump when the vehicle is inoperative. Thereby, sufficient lubrication of elements of the gearing present in the sump can be provided after the vehicle starts. Furthermore, in some operational modes described further in the following with respect to a standstill, draining lubricant from the tank to the sump may improve availability of lubrication and cooling when the mechanical pump is not driven for some reason.

In an embodiment, a flow rate of lubricant drained from the tank to the sump is set smaller than a total pumping capacity of the electric pump and, if present, the mechanical pump for pumping lubricant away from the sump. The foregoing may be applicable in at least one operational state of the vehicle. In one example, the foregoing may be applicable in all operational states of the vehicle. By setting the flow rate of draining lubricant from the tank as described above, it is possible lower the lubricant level in the sump or to enable a dry sump operation over a broader range of vehicle conditions. By contrast, if the flow rate of lubricant drained from the tank is higher than the flow rate of lubricant pumped away from the sump, it may be difficult or impossible for the electrical and/or mechanical pump to lower the lubricant level in the sump or establish a dry sump condition in the sump.

In an embodiment, the lubrication section comprises a driving unit cooling branch for cooling at least one of a stator and a rotor of a driving unit for driving the gearing. The driving unit cooling branch may comprise at least one channel for supplying lubricant to at least one of the rotor and the stator for cooling. The lubricant for cooling may be supplied so as to flow through at least one of the stator and the rotor. Alternatively or additionally, the lubricant may be supplied to come into contact with at least one of the stator and the rotor by being ejected onto the at least one of the stator and the rotor. In one example, both the stator and the rotor may be cooled by lubricant supplied by the driving unit cooling branch. The lubricant supplied by the driving unit cooling branch may be drained to the sump and/or to at least one of the electric pump and the mechanical pump, for example via driving unit drain channels. By means of the present embodiment, it is possible to cool the driving unit in addition to lubricating the gearing. Furthermore, in some operational states it is possible to use heat dissipated from the driving unit, for example from the rotor and/or the stator, to increase the lubricant temperature, for example after a cold start of the vehicle.

In one embodiment, the lubrication system comprises a cooler in a lubrication path between the electric pump and the lubrication section. The cooler may be formed as a heat exchanger for exchanging heat with a cooling circuit of the vehicle. Alternatively or additionally, the cooler may be formed as a cooler for dissipating heat into the environment. The cooler may be configured for selectively cooling the lubricant in the lubrication path. The lubrication path may be a lubrication path exclusive to the fluid communication between the electric pump and the lubrication section. Alternatively, the lubrication path may be the common lubrication path for the electric pump and the mechanical pump described above. By means of the present embodiment, it is possible to cool the lubricant so as to maintain a target operating temperature of the lubricant. The target operating temperature of the lubricant may be a temperature, at which lubricant properties are optimal with respect to lubrication efficiency, lubricant longevity and/or pump power consumption. For example, the target operating temperature of the lubricant may be between 80°C and 120°C, in one example 90°C.

In an embodiment, the lubrication section comprises a filter section in a lubrication path between the electric pump and the lubrication section. The lubrication path, in which the filter section is provided, may be the same lubrication path described above or a different lubrication path. The filter section may comprise a lubricant filter and a bypass valve for bypassing the lubricant filter. The lubricant filter may be configured to filter the lubricant flowing therethrough, for example for removing debris. The bypass valve may be configured as a pretensioned valve that is closed below a predetermined pressure and opens above a predetermined pressure. The lubricant filter and the bypass valve may be arranged in parallel, such that the bypass valve allows the lubricant to bypass the lubricant filter when a pressure drop in the lubricant filter would be higher than the predetermined pressure for opening the bypass valve. For example, the bypass valve may be configured to open when the pressure drop in the lubricant filter corresponds to a low lubricant temperature so as to minimize pressure losses in the lubrication system.

In a second aspect, the present disclosure relates to a method for controlling a lubrication system. The method may be carried out by a control unit. The lubrication system may be provided according to the first aspect. The method comprises obtaining a vehicle speed. The vehicle speed may refer to a driving speed of the vehicle. The vehicle speed may be obtained by means of a vehicle speed sensor, for example. Alternatively or additionally, the vehicle speed may be obtained from a different control unit, for example a vehicle control unit or an engine control unit. The method further comprises comparing the vehicle speed to a threshold vehicle speed. The threshold vehicle speed may refer to a vehicle speed, at which splashing losses are considered low or acceptable for the sake of providing sufficient lubrication. In other words, the threshold speed may represent a speed, at which providing sufficient lubrication is prioritized over improving overall efficiency. For example, the threshold vehicle speed may refer to a vehicle speed, at which an energy expenditure of the electric pump and, if present, the mechanical pump in a wet sump operational state is equal to an energy expenditure of the electric pump and, if present, the mechanical pump in a to provide sufficient lubrication dry sump operational state. The method further comprises driving the electric pump for drawing lubricant from the tank when the vehicle speed is above the threshold vehicle speed. The method further comprises driving the electric pump for drawing lubricant from the sump when the vehicle speed is below the threshold vehicle speed. By selectively driving the electric pump to draw lubricant from either the sump or the tank, the method of the second aspect allows for efficient lubrication over a broad range of vehicle conditions.

In an embodiment, the method may comprise obtaining a lubricant temperature. The lubricant temperature may refer to a lubricant temperature in the sump, for example. The lubricant temperature may be obtained by measurement, for example by means of a sensor, or by estimation, for example by measuring a pressure drop and estimating lubricant viscosity and thus lubricant temperature. The method may comprise comparing the lubricant temperature to a threshold temperature. The threshold temperature may refer to a temperature, below which the electric pump is inoperable. In one example, the threshold temperature may have a value between -10°C and -40°C, for example -20°C. The comparison of the lubricant temperature to the threshold temperature may be carried out by the control unit. The method may comprise driving a mechanical pump for supplying lubricant to the lubrication section and not driving the electric pump when the lubricant temperature is below the threshold temperature. Thereby, reliable lubrication is provided at low temperatures, for example when the electric pump is inoperable. Alternatively or additionally, the method may comprise driving the mechanical pump for supplying lubricant to the tank when the lubricant temperature is above the threshold temperature and the vehicle speed is above the threshold vehicle speed. Thereby, a dry sump operation may be provided for vehicle speeds, for which it is advantageous. Alternatively or additionally, the method may comprise driving the mechanical pump for supplying lubricant to the lubrication section when the lubricant temperature is above the threshold temperature and the vehicle speed is below the threshold vehicle speed. Thereby, a wet sump operation is provided for low vehicle speeds, in which lubricant is circulated from the sump through the lubrication section and back to the sump without being moved to the tank, such that lubricant level remains high and lubricant is heated quickly.

In an embodiment, the method comprises driving the electric pump when the vehicle is at a standstill. The standstill may refer to a vehicle speed of zero. Accordingly, the mechanical pump may be inoperable when the vehicle is at a standstill. By driving the electric pump in such a case, sufficient lubrication of the gearing and/or cooling of the driving unit may be provided. Optionally, the method may comprise obtaining a lubricant temperature and comparing the lubricant temperature to a further threshold temperature. The further threshold temperature may be a target temperature of the lubricant, for example as described above. The method may further comprise operating a cooler for cooling lubricant supplied to the lubrication section by the electric pump when the lubricant temperature is above the further threshold temperature. In such a case, the cooler may be active, namely operated, so as to prevent an undesired increase in lubricant temperature beyond the further threshold temperature. Optionally, the cooler may be inactive, namely not operated, when the lubricant temperature is below the further threshold temperature. Thereby, it is possible to allow the lubricant to achieve the further threshold temperature more quickly. By means of the present embodiment, sufficient lubrication and/or cooling may be provided over a broader range of vehicle operational states.

In an embodiment, the method comprises obtaining a control value representing at least one of a vehicle load, the vehicle speed, a mechanical pump flow rate and the lubricant temperature. The control value may represent at least one of the foregoing parameters or a combination thereof. The control value may correspond to a desired flow rate to be provided by the electric pump for optimal efficiency. The control value may be provided as a multidimensional mapping of the foregoing parameters and may be obtained in advance, for example by means of measurement or simulation. The method may further comprise controlling a flow rate of the electric pump depending on the control value. Thereby, efficiency is improved.

In a third aspect, the present disclosure relates to a control unit configured to control a lubrication system according to the method of the second aspect. The respective advantages and further features can be taken from the description of the second aspect, wherein embodiments of the second aspect also form embodiments of the third aspect and vice versa. The control unit may be a standalone lubrication system control unit. Alternatively, the control unit may be integrated in one of a gearing control unit, an engine control unit or a vehicle control unit. The lubrication system may be provided according to the first aspect. The respective advantages and further features can be taken from the description of the first aspect, wherein embodiments of the first aspect also form embodiments of the third aspect and vice versa.

In a fourth aspect, the present disclosure relates to a gearing. The gearing may comprise a lubrication system according to the first aspect or a control unit according to the third aspect. The respective advantages and further features can be taken from the description of the first or third aspect, wherein embodiments of the first or third aspect also form embodiments of the fourth aspect and vice versa.

In an embodiment, the gearing comprises a first planetary gear set and a second planetary gear set. The first planetary gear set may comprise at least a first element, a second element and a third element._The second planetary gear set may comprise at least a first element, a second element and a third element. An input shaft may be non-rotatably connected to the first element of the first planetary gear set. The second element of the first planetary gear set may be non-rotatably connected to a first output shaft. The third element of the first planetary gear set may be non-rotatably connected to the first element of the second planetary gear set. The second element of the second planetary gear set may be non-rotatably connected to a stationary member. The third element of the second planetary gear set may be non-rotatably connected to a second output shaft.

A permanent non-rotatable connection is a connection in which the two elements are rigidly coupled together. The elements may be formed as separate elements connected to each other in a non-rotatable manner or integrally. A non-rotatable connection between two elements may also be established by a switching element, e.g. a clutch or a brake. The non-rotatable connection may be established when the switching element is actuated. The non-rotatable connection may be released when the switching element is no longer actuated.

The first, second and third elements, for example, may each be a sun gear, a planetary carrier or a ring gear of the respective planetary gear set. In one example, each first element of the planetary gear sets may be a sun gear, each second element of the planetary gear sets may be a planetary carrier and each third element of the planetary gear sets may be a ring gear. The ring gear of the first planetary gear set may be formed integrally with the sun gear of the second planetary gear set. Thereby, a gearing with compact dimensions can be provided. The respective planetary gear set may be a plus or a minus planetary gear set. Each of the planetary gear sets may have planetary gears that may be rotatably mounted on the respective planetary carrier of the one planetary gear set, for example via planetary pins. The planetary gears may mesh with both the sun gear and the ring gear of the respective planetary gear set.

In the present embodiment, at least one of the elements of the first and second planetary gear sets is lubricated by the lubrication section. For example, some or all of the elements of the first and second planetary gear sets may be supplied with lubricant by the lubrication section, for example via the gearing lubrication branch. If a mechanical pump is present, it may be driven by an element of one of the planetary gear sets. In one example, the mechanical pump may be driven by a ring gear of the second planetary gear set.

In a fifth aspect, the present disclosure relates to a vehicle. The vehicle may comprise a gearing according to the fourth aspect, a control unit according to the third aspect or a lubrication system according to the first aspect. The respective advantages and further features can be taken from the description of the first, third or fourth aspect, wherein embodiments of the first, third or fourth aspect also form embodiments of the fifth aspect and vice versa.

### Brief description of drawings

Figure 1 shows a vehicle with a gearing and a lubrication system according to an embodiment of the present disclosure.
Figure 2 schematically shows a general layout of a gearing for the vehicle of Figure 1 according to an embodiment of the present disclosure.
Figure 3 schematically shows a lubrication system for a gearing according to an embodiment of the present invention.
Figure 4 schematically shows a first operational mode of the lubrication system shown in Figure 3.
Figure 5 shows a second operational mode of the lubrication system shown in Figure 3.
Figure 6 shows a third operational mode of the lubrication system shown in Figure 3.
Figure 7 shows a fourth operational mode of the lubrication system shown in Figure 3.
Figure 8 shows an overview of an operational strategy for the lubrication system shown in Figure 3.
Figure 9 shows schematically a method for controlling the lubrication system shown in Figure 3 with the control unit according to an embodiment.

### Detailed description of embodiments

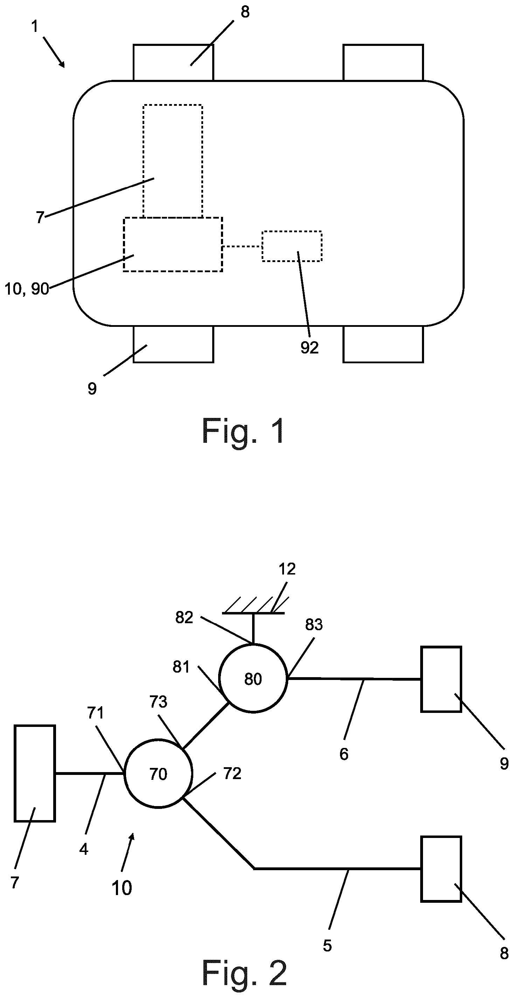

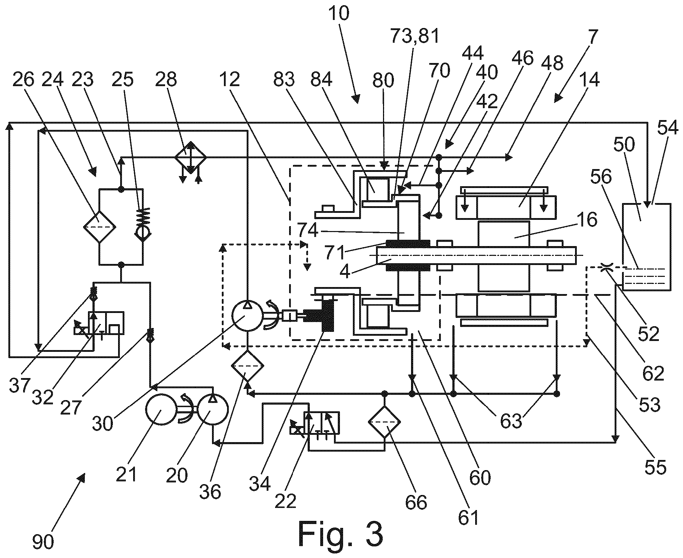

Figure 1 shows a vehicle 1 with a gearing 10 and a lubrication system 90 according to an embodiment of the present disclosure. The vehicle 1 comprises a driving unit 7 presently formed as an electric motor. The gearing 10 is configured for transferring power input by the driving unit 7 to at least two drive elements 8, 9 presently formed as wheels. The lubrication system 90 will be explained in detail further in the following with reference to Figures 3 to 9. The vehicle further comprises a control unit 92 for controlling at least the lubrication system 90.

Figure 2 schematically shows a general layout of the gearing 10 according to an embodiment of the present disclosure. In the present embodiment, the gearing 10 is formed as a distribution gearing with two planetary gear sets. As can be seen from Figure 2, the gearing 10 comprises a first planetary gear set 70 having a first element 71, a second element 72 and a third element 73. Furthermore, the gearing 10 comprises a second planetary gear set 80 having a first element 81, a second element 82 and a third element 83. Power generated by the driving unit 7 can be introduced into the gearing 10 via an input shaft 4. The input shaft 4 is mechanically operatively connected to the first element 71 of the first planetary gear set 70, here by being permanently non-rotatably connected. The third element 73 of the first planetary gear set 70 is permanently non-rotatably connected to the first element 81 of the second planetary gear set 80, here by being integrally formed. The second element 82 of the second planetary gear set 80 is permanently non-rotatably fixed to a stationary member 12, here a housing for accommodating and supporting the first and second planetary gear sets 70, 80. A first output shaft 5 is mechanically operatively connected to the second element 72 of the first planetary gear set 70, in this case permanently non-rotatably connected, for outputting power to a first drive element 8. A second output shaft 6 is mechanically operatively connected to the third element 83 of the second planetary gear set 80, in this case permanently non-rotatably connected, for outputting power to a second drive element 9.

Figure 3 shows a lubrication system 90 according to an embodiment of the present disclosure. The lubrication system 90 is presently applied to a gearing 10 configured according to the general layout shown in Figure 2. In the present embodiment, each of the first elements 71, 81 is formed as a sun gear, each of the second elements 72, 82 (not shown in Figure 3) is formed as a planetary carrier and each of the third elements 73, 83 is formed as a ring gear. The ring gear 73 of the first planetary gear set 70 is formed integrally with the sun gear 81 of the second planetary gear set 80. Each planetary carrier 72, 82 comprises a plurality of planet gears 74, 84 meshing with the respective sun gear 71, 81 and ring gear 73, 83. Furthermore, the first planetary gear set 70 and the second planetary gear set 80 are offset along an axial direction of the gearing 10. The first output shaft 5 (not shown) is permanently non-rotatably connected to the planetary carrier 72 of the first planetary gear set 70. The second output shaft 6 (not shown) is permanently non-rotatably connected to the ring gear 83 of the second planetary gear set 80. The input shaft 4 is connected to a rotor 14 of a driving unit 7, which also comprises a stator 16.

The lubrication system 90 comprises a sump 60 for receiving lubricant from the gearing 10. The sump 60 is presently formed as an internal volume of the housing 12 at a bottom part of the housing 12. In the present embodiment, at a first lubricant level 62 in the sump 60, the ring gears 73, 83, the planets 74, 84 and the sun gear 81 of the second planetary gear set 80 are partially immersed in the lubricant present in the sump 60. In the present embodiment, lubricant flows passively into the sump under the influence of gravity.

The lubrication system 90 comprises a tank 50 for storing lubricant. The tank 50 comprises a tank inlet 54 formed at an upper part of the tank 50, a tank outlet 55 formed at a bottom part of the tank 50 as well as a drain opening 52 formed at an intermediate height between the bottom part in the top part of the tank 50. The drain opening 52 is in fluid communication with the housing 12 and the sump 60 via a drain path 53. The tank 50 is configured such that lubricant above a first lubricant level 56 in the tank 50 can slowly drain via the drain opening 52 and the drain path 53 into the sump 60.

The lubrication system 90 comprises a lubrication section 40. The lubrication section 40 comprises a gearing lubrication branch 42, 44 and an optional driving unit cooling branch 46, 48. In the present embodiment, the gearing lubrication branch 42, 44 is configured to provide lubricant for lubricating the first planetary gear set 70 via a first sub-branch 42 and to provide lubricant for lubricating the second planetary gear set 80 via a second sub-branch 44. The optional driving unit cooling branch 46, 48 is configured to supply lubricant for cooling the rotor 16 via a rotor cooling branch 46 and for supplying lubricant for cooling the stator 14 via a stator cooling branch 48.

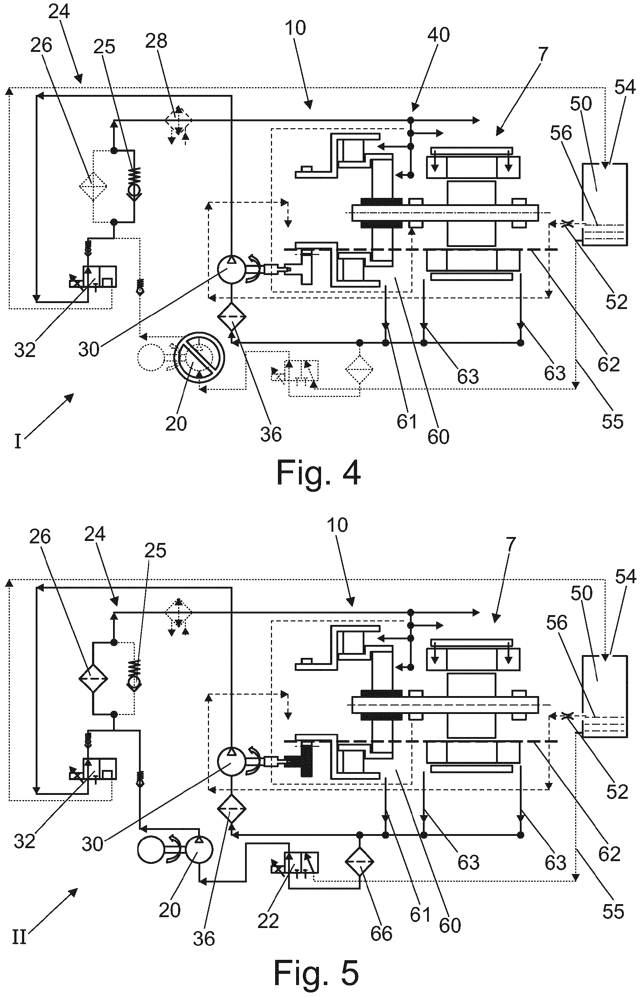

The lubrication system 90 comprises a mechanical pump 30. The mechanical pump 30 is presently driven by a driving gear 34 meshing with a corresponding gear non-rotatably connected to the ring gear 83 of the second planetary gear set 80. Accordingly, the mechanical pump 30 is mechanically operatively connected to the ring gear 83 of the second planetary gear set 80 such that the mechanical pump 30 is driven when the ring gear 83 of the second planetary gear set 80 rotates. An inlet of the mechanical pump 30 is in fluid communication with the sump 60 via a sump drain channel 61. Accordingly, the mechanical pump 30 is configured to draw lubricant from the sump 60. The mechanical pump 30 is presently also in fluid communication with a pair of driving unit drain channels 63 that are configured to drain lubricant supplied to the driving unit 7. Accordingly, the mechanical pump presently also draws lubricant from the driving unit 7, namely at least a part of the lubricant supplied via the driving unit cooling branch 46, 48. In the present embodiment, an optional first lubricant filter 36 is interposed between the inlet of the mechanical pump 30 and the drain channels 61, 63. In other embodiments (not shown), the first lubricant filter 36 is not provided or is arranged elsewhere. An outlet of the mechanical pump 30 is in fluid communication with a first control valve 32. The first control valve 32 is configured to selectively fluidly connect the outlet of the mechanical pump 30 with the lubrication section 40 or the tank inlet 54. Different states of the first control valve 32 will be described further in the following with reference to Figs. 4 to 7. The operation of the first control valve 32 is controlled by the control unit 92.

The lubrication system 90 comprises an electric pump 20. The electric pump 20 is selectively driven by a pump motor 21, whose operation is controlled by the control unit 92. The electric pump 20 is configured to provide a variable lubricant pumping capacity. An inlet of the electric pump 20 is in fluid communication with an outlet of a second control valve 22. The second control valve 22 is controlled by the control unit 92. One inlet of the second control valve 22 is in fluid communication with the drain channels 61, 63 for drawing lubricant from the sump 60. An optional second lubricant filter 66 is interposed between the one inlet of the second control valve 22 and the drain channels 61, 63. Another inlet of the second control valve 22 is in fluid communication with the tank outlet 55. Accordingly, the electric pump 20 is configured to selectively draw lubricant from the sump 60 or the tank 50 in accordance with the operation of the second control valve 22. An outlet of the electric pump 20 is in fluid communication with the lubrication section 40. In the present embodiment, a common lubricant path 23 for fluid communication with the lubrication section 40 is provided for the electric pump 20 and the first control valve 32. In the present embodiment, upstream of the lubricant path 23, a check valve 27 is provided downstream of the outlet of the electric pump 20 and another check valve 37 is provided downstream of the outlet of the first control valve 32 so as to avoid interference therebetween. In the lubrication path 23, an optional filter section 24 comprising a third lubricant filter 26 and an optional bypass valve 25 is presently provided. The bypass valve 25 is configured to bypass the third lubricant filter 26 when a pressure drop in the filter 26 is above a threshold pressure corresponding to a low lubricant temperature. Furthermore, a cooler 28 for cooling lubricant flowing through the lubrication path 23 is provided downstream of the filter section 24. The cooler is in fluid communication with a cooling circuit (not shown) and is configured to selectively cool the lubricant flowing through the lubrication path 23.

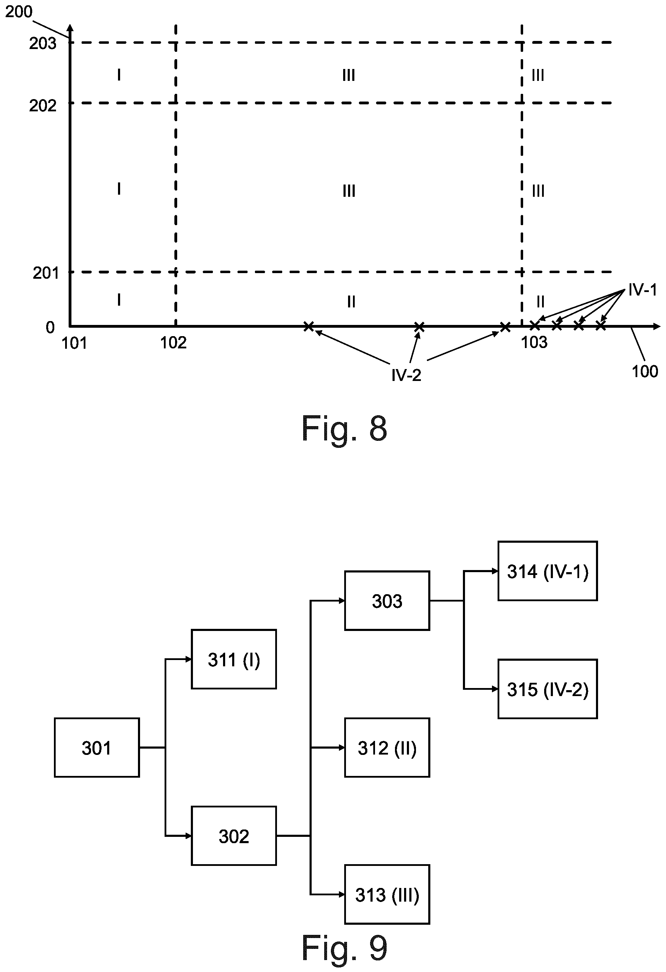

The lubrication system 90 of the present embodiment is provided with four operational modes, which are carried out by the control unit 92 depending on a lubricant temperature 100 and a vehicle speed 200. Figures 4 to 7 schematically show lubricant flows in each of the operational modes. Figure 8 shows a diagram representing selection criteria for each operational mode.

Figure 4 shows a first operational mode I, which is carried out by the control unit 92 when a lubricant temperature 100 corresponding to a lubricant temperature in the sump 60 is below a first threshold temperature 102, for example -20°C. The first threshold temperature 102 corresponds to a minimum operating temperature for the electric pump 20. Accordingly, in the first operational mode I, the electric pump 20 is not operable and thus not driven. On the other hand, a minimum threshold temperature 101, above which the driving unit 7 is operable, is lower than the first threshold temperature 102.

Accordingly, in the first operational mode I, the driving unit 7 is driven for driving the vehicle 1. Since the mechanical pump 30 is mechanically operatively connected to the gearing 10, the mechanical pump 30 can be driven even at the temperature below the first threshold temperature 102. In the first operational mode I, the first control valve 32 is operated for fluidly connecting the mechanical pump 30 with the lubrication section 40. Accordingly, lubricant pumped by the mechanical pump 30 can flow through the filter section 24 to the lubrication section 40. In the filter section 24, since a pressure drop in the third lubricant filter 26 is high due to the low temperature of the lubricant, the bypass valve 25 is opened and the third lubricant filter 26 is bypassed. The first operational mode I may be suitable, for example, when the vehicle 1 has been at a standstill in very low temperatures for an extensive timeframe, such that the lubricant temperature 100 is below the first threshold temperature 102 and all lubricant has drained into the sump 60 substantially to the first lubricant level 62. In the first operational mode I, lubricant does not flow into and out of the tank 50, such that an amount of lubricant drawn by the mechanical pump 30 from the sump 60, presently the drain channels 61, 63, is substantially the same as the amount of lubricant supplied to the lubrication section 40. Accordingly, the first lubricant level 62 in the sump 60 is substantially maintained. Thus, the first operational mode I corresponds to a wet sump, in which the lubricant level is high and accordingly the splash losses of the gearing 10 are also high. Furthermore, the stator 14 of the driving unit 7 is at least partially immersed in the lubricant having the first lubricant level 62. Accordingly, the splashing losses of the gearing 10 and the heat losses of the driving unit 7 provide a large heat flow into the lubricant. By means of the first operational mode I, reliable lubrication is provided by means of the mechanical pump 30, and a quick increase of lubricant temperature is achieved by means of the splashing losses of the gearing 10 and the heat losses of the driving unit 7. The first operational mode I is optional and allows for efficient lubrication over a broader range of the vehicle conditions.

Figure 5 shows a second operational mode II performed when the lubricant temperature is above the first threshold temperature 102. The second operational mode II is performed when the vehicle speed is low, namely below a threshold vehicle speed 201, for example 20 km/h. In the present embodiment, in the second operational mode II, the electric pump 20 is driven in accordance with a vehicle load, the vehicle speed 200, a volume flow rate of the mechanical pump 30 as well as the lubricant temperature 100. The second control valve 22 is controlled to provide fluid communication with the drain channels 61, 63, such that the electric pump 20 draws lubricant from the sump 60 and not from the tank 50. At the same time, the mechanical pump 30 is in fluid communication with the lubrication section 40 via the first control valve 32. Accordingly, in the second operational mode II, the mechanical pump 30 and the electric pump 20 work together to provide sufficient lubricant flow for cooling and lubrication. The second operational mode II also corresponds to a wet sump. Therefore, sump splashing losses may arise from the gearing 10. However, due to the low vehicle speed 200, the splashing losses are low. Likewise, due to the low vehicle speed 200, the volume flow rate of the mechanical pump 30 is low, such that the main lubrication effect is provided by the electric pump 20 and the mechanical pump 30 is assisting. The second operational mode II is optional and allows for efficient lubrication over a broader range of the vehicle conditions.

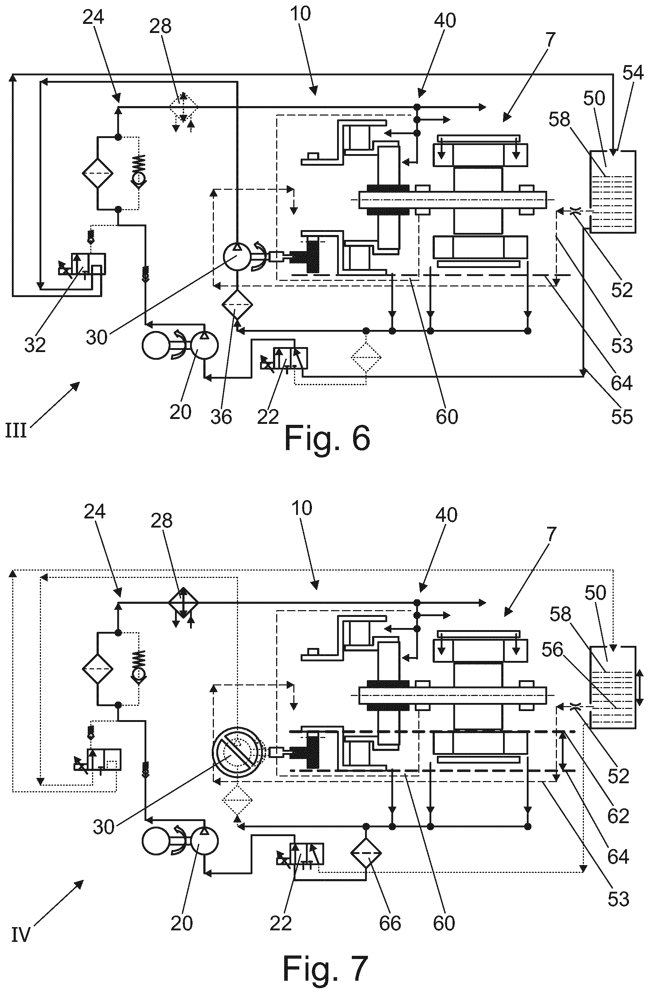

Figure 6 schematically shows a third operational mode III. The third operational mode III is performed when the lubricant temperature 100 is above the first threshold temperature 102 and the vehicle speed 200 is above the threshold vehicle speed 201. In the third operational mode III, the mechanical pump 30 and the electric pump 20 are driven as described in the foregoing with respect to the second operational mode II. However, unlike the second operational mode II, in the third operational mode III, the first control valve 32 is controlled to provide a fluid communication between the mechanical pump 30 and the tank inlet 54. Likewise, the second control valve 22 is controlled to provide a fluid communication between the tank outlet 55 and the electric pump 20 such that the electric pump 20 can draw lubricant from the tank 50. Accordingly, in the third operational mode III, the mechanical pump 30 pumps lubricant from the sump 60 to the tank 50, and the electric pump 20 pumps lubricant from the tank 50 to the lubrication section 40. Thereby, the lubricant level in the sump 60 is lowered to a second lubricant level 64, at which presently none of the planetary gear elements of the gearing 10 are immersed in lubricant. Therefore, splashing losses are low or negligible in the third operational mode III. Furthermore, since the mechanical pump 30 merely pumps the lubricant that has been supplied by the electric pump 20 to the lubrication section 40, the load of the mechanical pump 30 is low, thereby reducing power consumption. Due to the lubricant received by the tank 50 from the mechanical pump 30, the lubricant level in the tank 50 rises to a second tank lubricant level 58. At this time, lubricant can drain from the drain opening 52 via the drain path 53 to the sump 60. However, a flow rate through the drain opening 52 is presently set such that the drained lubricant flow rate is lower than the pumped lubricant flow rate from the sump 60. Accordingly, the draining of lubricant via the drain opening 52 does not prevent the lowering of the lubricant level in the sump 60 to the second lubricant level 64. In summary, in the third operational mode III, a dry sump is achieved, resulting in low splashing losses and low power consumption by the mechanical pump 30. The cooler 28 is selectively activated to cool the lubricant, when the lubricant temperature is above a second threshold temperature 103. The second threshold temperature 103 is presently set in correspondence with a target operating temperature of the lubricant, for example 90°C.

Figure 7 shows a fourth operational mode IV performed when the vehicle is at a standstill. When the vehicle speed 200 is zero and the vehicle is at the standstill, the mechanical pump 30 is not driven by the gearing 10. Accordingly, only the electric pump 20 is driven. In the fourth operational mode IV, the second control valve 22 is operated such that the electric pump 20 draws lubricant from the sump 60. Accordingly, the electric pump 20 supplies lubricant to the lubrication section 40 so as to ensure proper cooling and lubrication despite the mechanical pump 30 not being driven. Depending on the preceding driving conditions and lubrication conditions, the lubricant level in the sump 60 may be anywhere between the first lubricant level 62 and the second lubricant level 64. Likewise, the tank lubricant level in the tank 50 may be between the first tank lubricant level 56 and the second tank lubricant level 58. Accordingly, lubricant may drain from the tank 50 to the sump 60 via the drain opening 52, such that sufficient lubricant is present in the sump 60 for being drawn by the electric pump 20. Depending on the lubricant temperature, the cooler 28 may be active or inactive. That is, in case the lubricant temperature 100 is above a second threshold temperature 103, for example 90°C, the cooler may be active. Otherwise, the cooler 28 may be inactive so as to enable the lubricant temperature 100 to reach the second threshold temperature 103. The fourth operational mode IV is optional and allows for efficient lubrication over a broader range of the vehicle conditions, for example when the vehicle is stopped.

Figure 8 shows an overview of the selection of operational modes in accordance with the lubricant temperature 100 and the vehicle speed 200. In case the lubricant temperature 100 is between the minimum threshold temperature 101 and the first threshold temperature 102, the first operational mode I is always selected regardless of the vehicle speed 200, since only the mechanical pump 30 is available at such temperatures. In case the lubricant temperature 100 is above the first threshold temperature 102, the third operational mode III is selected when the vehicle speed 200 is above the threshold vehicle speed 201, since it allows for a dry sump operation with highest efficiency. It is noted that for high vehicle speeds, for example between a nominal vehicle speed 202 and a maximum vehicle speed 203, the power consumption of the electric pump 20 may increase greatly in low temperature due to high lubricant demand and high lubricant viscosity. However, in such an operational state, the lubricant temperature is expected to rise quickly due to high driving unit load and corresponding heat dissipation into the lubricant, such that lubricant viscosity and electric pump 20 power consumption can decrease accordingly. In case the lubricant temperature 100 is above the first threshold temperature 102 and the vehicle speed 200 is between zero and the threshold vehicle speed 201, the second operational mode II is performed, in which a wet sump is provided for combining capacities of the mechanical pump 30 and the electric pump 20 so as to improve lubrication. In the second operational mode II, splashing losses occur, but are low due to the low vehicle speed 200. In case the vehicle speed 200 is zero, the fourth operational mode IV is carried out. Accordingly, only the electric pump 20 is driven, since the mechanical pump 30 is not available. The driving of the electric pump 20 allows for sufficient lubrication and cooling. In case the lubricant temperature 100 is above the second threshold temperature 103, the cooler 28 is active (indicated as IV-2). Below the second threshold temperature 103, the cooler 28 is inactive (indicated as IV-1) so as to allow an increase of the lubricant temperature 100 to the second threshold temperature 103, at which lubricant properties are optimal.

Figure 9 shows schematically a method for controlling the lubrication system 90 with the control unit 92. The control method of Figure 9 may be performed continuously or at predetermined intervals. In a first step 301, the lubricant temperature 100 is obtained, presently by means of a lubricant temperature sensor (not shown) arranged in the sump 60, and the obtained lubricant temperature 100 is compared to the first threshold temperature 102. In case the obtained lubricant temperature 100 is below the first threshold temperature 102, the first operational mode I is carried out in a control step 311. In case the obtained lubricant temperature 100 is above the first threshold temperature 102, in a step 302, the vehicle speed 200 is obtained, here by a vehicle speed sensor (not shown), and compared to the threshold vehicle speed 201. In case the vehicle speed 200 is above the threshold vehicle speed 201, the third operational mode III is carried out in a control step 313. In case the vehicle speed 200 is below the threshold vehicle speed 201, the second operational mode II is carried out in a control step 312. In case the vehicle speed 200 is zero, the fourth operational mode IV is carried out as follows. In the present embodiment, in an optional step 303, the obtained lubricant temperature 100 is compared to the second threshold temperature 103. In case the lubricant temperature 100 is above the second threshold temperature 103, the cooler 28 is activated and the fourth operational mode IV-1 is performed with an active cooler in a control step 314. In case the obtained lubricant temperature 100 is below the second threshold temperature 103, the cooler 28 is not activated, and the fourth operational mode IV-2 is carried out with an inactive cooler 28 in a control step 315.

With the lubrication system 90 and the control unit 92 for carrying out the operational modes I, II, III and IV, efficient cooling is achieved over a broad range of vehicle speeds and lubricant temperatures.

### Reference signs

- 1: vehicle
- 4: input shaft
- 5, 6: output shaft
- 7: driving unit
- 8, 9: drive element
- 10: gearing
- 12: housing
- 14: stator
- 16: rotor
- 20: electric pump
- 21: pump motor
- 22, 32: control valve
- 23: lubrication path
- 24: filter section
- 25: bypass valve
- 26, 36, 66: lubricant filter
- 27, 37: check valve
- 28: cooler
- 30: mechanical pump
- 34: driving gear
- 40: lubrication section
- 42, 44: gearing lubrication branch
- 46, 48: driving unit cooling branch
- 50: tank
- 52: drain opening
- 53: drain path
- 54: tank inlet
- 55: tank outlet
- 56, 58, 62, 64: lubricant level
- 60: sump
- 61, 63: drain channel
- 70, 80: planetary gear set
- 71, 81: first element
- 72, 82: second element
- 73, 83: third element
- 74, 84: planet gear
- 90: lubrication system
- 92: control unit
- 100: lubricant temperature
- 101, 102, 103: threshold temperature
- 200, 201, 202, 203: vehicle speed
- I, II, III, IV: operational modes
- 301, 302, 303, 311, 312, 313, 314, 315: control steps

## Claims

1. A lubrication system (90) for a gearing (10) of a vehicle (1), comprising a tank (50) for storing lubricant, a sump (60) for receiving lubricant from the gearing (10), a lubrication section (40) with a gearing lubrication branch (42; 44) for supplying lubricant to at least one element of the gearing (10) for lubrication, an electric pump (20) for selectively supplying lubricant to the lubrication section (40), and a control valve (22) for selectively fluidly connecting the electric pump (20) to the sump (60) or the tank (50) for drawing lubricant.

2. The lubrication system (90) according to claim 1, **characterized by** comprising a mechanical pump (30) drivable by an element (83) of the gearing (10) for drawing lubricant from the sump (60) and a further control valve (32) for selectively fluidly connecting the mechanical pump (30) to the lubrication section (40) or the tank (50) for supplying lubricant.

3. The lubrication system (90) according to claim 1 or 2, **characterized in that** the tank (50) is in fluid communication with the sump (60) for draining lubricant to the sump (60).

4. The lubrication system (90) according to claim 3, **characterized in that** a flow rate of lubricant drained from the tank (50) to the sump (60) is set smaller than a total pumping capacity of the electric pump (20) and, if present, the mechanical pump (30) for pumping lubricant away from the sump (60).

5. The lubrication system (90) according to any one of the preceding claims, **characterized in that** the lubrication section (40) comprises a driving unit cooling branch (46; 48) for cooling at least one of a stator (14) and a rotor (16) of a driving unit (7) for driving the gearing (10).

6. The lubrication system (90) according to any one of the preceding claims, **characterized by** comprising a cooler (28) in a lubrication path (23) between the electric pump (20) and the lubrication section (40).

7. The lubrication system (90) according to any one of the preceding claims, **characterized by** comprising a filter section (24) in a lubrication path (23) between the electric pump (20) and the lubrication section (40), the filter section (24) comprising a lubricant filter (26) and a bypass valve (25) for bypassing the lubricant filter (26).

8. A method for controlling a lubrication system (90) according to any one of the preceding claims, **characterized by** comprising:
- obtaining (302) a vehicle speed (200),
- comparing (302) the vehicle speed (200) to a threshold vehicle speed (201),
- driving (313) the electric pump (20) for drawing lubricant from the tank (50) when the vehicle speed (200) is above the threshold vehicle speed (201), and
- driving (312) the electric pump (20) for drawing lubricant from the sump (60) when the vehicle speed (200) is below the threshold vehicle speed (201).

9. The method according to claim 8, **characterized by** comprising:
- obtaining (301) a lubricant temperature (100),
- comparing (301) the lubricant temperature (100) to a threshold temperature (102), and at least one of
- driving (311) a mechanical pump (30) for supplying lubricant to the lubrication section (40) and not driving (301) the electric pump (20) when the lubricant temperature (100) is below the threshold temperature (102),
- driving (312) the mechanical pump (30) for supplying lubricant to the lubrication section (40) when the lubricant temperature (100) is above the threshold temperature (102) and the vehicle speed (200) is below the threshold vehicle speed (201), and
- driving (313) the mechanical pump (30) for supplying lubricant to the tank (50) when the lubricant temperature (100) is above the threshold temperature (102) and the vehicle speed (200) is above the threshold vehicle speed (201).

10. The method according to claim 8 or 9, **characterized by** comprising
- driving (314, 315) the electric pump (20) when the vehicle (1) is at a standstill,
- obtaining (301) a lubricant temperature (100),
- comparing (303) the lubricant temperature (100) to a further threshold temperature (103), and
- operating (314) a cooler (28) for cooling lubricant supplied to the lubrication section (40) by the electric pump (20) when the lubricant temperature (100) is above the further threshold temperature (103).

11. The method according to according to any one of claims 8 to 10, **characterized by** comprising
- obtaining a control value representing at least one of a vehicle load, the vehicle speed (200), a mechanical pump flow rate and the lubricant temperature (100), and
- controlling a flow rate of the electric pump (20) depending on the control value.

12. Control unit configured to control a lubrication system (90) according to the method of one of claims 8 to 11.

13. A gearing (10) comprising a lubrication system (90) according to any one of claims 1 to 7 or a control unit according to claim 12.

14. The gearing (10) according to claim 13, **characterized in that** the gearing (10) comprises a first planetary gear set (70) and a second planetary gear set (80), wherein the first planetary gear set (70) comprises at least a first element (71), a second element (72) and a third element (73) and the second planetary gear set (80) comprises at least a first element (81), a second element (82) and a third element (83), wherein an input shaft (4) is non-rotatably connected to the first element (71) of the first planetary gear set (70), the second element (72) of the first planetary gear set (70) is non-rotatably connected to a first output shaft (5), the third element (73) of the first planetary gear set (70) is non-rotatably connected to the first element (81) of the second planetary gear set (80), the second element (82) of the second planetary gear set (80) is non-rotatably connected to a stationary member (12), and the third element (83) of the second planetary gear set (80) is non-rotatably connected to a second output shaft (6), wherein at least one of the elements (71, 72, 73, 81, 82, 83) of the first and second planetary gear sets (70, 80) is lubricated by the lubrication section (40).

15. A vehicle (1) comprising a gearing (10) according to claim 13 or 14, a control unit according to claim 12 or a lubrication system (90) according to any one of claims 1 to 7.
